# EUROPEAN PATENT APPLICATION

(11) **EP 2 509 203 A1**
(43) Date of publication of application: **10.10.2012**
(21) Application number: 10832873.3
(22) Date of filing: 30.11.2010
(51) Int. Cl.: H02M 3/28

(54) **POWER SUPPLY DEVICE AND METHOD FOR CONTROLLING SAME**

(30) Priority: 30.11.2009 JP 2009271378; 03.03.2010 JP 2010046179
(71) Applicant: Panasonic Corporation, Kadoma-shi Osaka 571-8501 (JP)
(72) Inventor: MIYAZAKI, Makoto, Osaka-shi Osaka 540-6207 (JP)
(74) Representative: TBK
(86) International application number: PCT/JP2010/006962
(87) International publication number: WO 2011/065024

(57) **Abstract**

In a normal operation, a switch control circuit in a control IC for switching power supply operates to control an opening and closing operation of a switching element. When a remote control receiving circuit issues an instruction to perform a standby operation, an energy saving switch is opened in a period elapsed until an output voltage of a rectification/smoothing circuit for secondary output winding falls below a predetermined value. Thus, an operation of a switch control circuit in the control IC for switching power supply is stopped such that the opening and closing operation of the switching element is not performed. In this case, the remote control receiving circuit and a timer microcomputer are operable with electric power based on a voltage at a smoothing capacitor in the rectification/smoothing circuit for secondary output winding.

## Description

### [Technical Field]

The present invention relates to a power supply device capable of performing a standby operation and a method for controlling the same.

### [Background Art]

In a switching power supply device, a switching element connected to a primary winding of a transformer is turned on and off. Known as a method for reducing power consumption in the switching power supply device has conventionally been a method for reducing a switching frequency and a method for providing an idle period in a switching period.

In a switching power supply device discussed in Patent Document 1, a microcomputer controls the oscillation frequency of the switching power supply device. Thus, the conversion efficiency in a standby mode is improved such that power consumption is reduced.

A switching power supply device that performs burst switching control in a normal operation has been known. In the burst switching control, when an output voltage of a rectification/smoothing circuit connected to a secondary winding of a transformer has risen above an upper-limit voltage, an on/off operation of the switching element is temporarily stopped. When the output voltage of the rectification/smoothing circuit has fallen below a lower-limit voltage, the on/off operation of the switching element is resumed. Thus, the output voltage in a normal operation is stabilized.

In a switching power supply device discussed in Patent Document 2, in an idle period of burst switching control, the supply of electric power to a switching control circuit for controlling a switching element is stopped. Thus, power consumption at the time of the burst switching control of the switching power supply device is reduced.
[Patent Document 1] JP 9-140128 A
[Patent Document 2] JP 2004-88959 A

### [Summary of Invention]

### [Technical Problem]

In the switching power supply device discussed in the above-mentioned Patent Document 1, a switching operation is performed even in a standby operation. Therefore, electric power is consumed in a switching element driving circuit and a switch driving control circuit.

On the other hand, in the switching power supply device discussed in Patent Document 2, power consumption in a normal operation can be reduced. However, Patent Document 2 does not discuss a technique for reducing power consumption in a standby mode of the switching power supply device.

For example, electrical equipment such as a television receiver, a recording/reproduction device, and an air-conditioner is operated using a remote control. While a power supply switch is being turned off, therefore, the power supply device is required to be brought into an operating state by receiving an infrared signal from the remote control while operating a switching element. In a power supply device used for such electrical equipment, electric power is supplied to a remote control receiving circuit in a standby operation while being supplied to a switching control circuit for controlling the switching element, and electric power is supplied to the whole circuit of the electrical equipment in a normal operation.

To reduce power consumption in the standby mode, it is desired to sufficiently reduce electric power that is consumed in the switching element and the switching control circuit while enabling the transition from the standby mode to the normal operation.

An object of the present invention is to provide a power supply device that can transit from a standby operation to a normal operation and in which power consumption in the standby mode is sufficiently reduced and a method for controlling the same.

### [Solution to Problem]

(1) According to an aspect of the present invention, a power supply device can be switched to a normal operation for supplying electric power to a circuit connected to the power supply device by an instruction issued by an instructor that operates with electric power from the power supply device and a standby mode for not supplying electric power to the circuit connected to the power supply device, and includes a voltage generator that generates a DC voltage, a first switch, a voltage converter that is connected to the voltage generator via the first switch, and converts the DC voltage generated by the voltage generator into a DC voltage for supplying electric power to the circuit connected to the power supply device and the instructor, a second switch, a control circuit that is operable to control an opening and closing operation of the first switch by receiving an output voltage of the voltage converter as a power supply voltage via the second switch, and a switch controller that closes the second switch in the normal operation, and opens the second switch when a first period has elapsed since the instructor issued an instruction to perform the standby mode.

In the power supply device, in the normal operation, the control circuit operates to control the opening and closing operation of the first switch. Thus, the voltage converter converts the DC voltage generated by the voltage generator into the DC voltage for supplying the electric power to the circuit connected to the power supply device. In this case, the second switch is closed such that the control circuit receives the output voltage of the voltage converter as the power supply voltage via the second switch. The instructor operates with the electric power based on the output voltage of the voltage converter.

When the first period has elapsed since the instructor issued the instruction to perform the standby mode, the second switch is opened. Thus, the control circuit stops operating such that the opening and closing operation of the first switch is not performed. As a result, the output voltage of the voltage converter falls. In this case, the instructor is operable with the electric power based on the falling output voltage of the voltage converter. Therefore, the instructor can issue the instruction to perform the normal operation.

Thus, in the first period in the standby operation, the electric power from the voltage generator is not consumed in the voltage converter and the control circuit. The instructor is in an operable state. The result enables the transition from the standby mode to the normal operation, and sufficiently reduces power consumption in the standby operation.

(2) The power supply device may further include a third switch that supplies the DC voltage generated by the voltage generator as the power supply voltage to the control circuit in a second period following the first period.

In this case, in the second period following the first period, the DC voltage generated by the voltage generator is supplied as the power supply voltage to the control circuit. Thus, the control circuit operates such that the first switch performs the opening and closing operation. As a result, the output voltage of the voltage converter rises again before falling below a predetermined value. Therefore, the instructor is prevented from stopping operating.

(3) The power supply device may further include a timer that measures an elapsed time from the time point where the second switch is opened, and the third switch may supply the DC voltage generated by the voltage generator as the power supply voltage to the control circuit when the elapsed time measured by the timer reaches a predetermined time.

In this case, the first period is automatically set by the elapsed time measured by the timer. Thus, the operation of the control circuit can be stopped for a predetermined period while preventing the output voltage of the voltage converter from falling below a predetermined value.

(4) The power supply device may further include a voltage detector that detects an output voltage of the voltage converter, and the third switch may supply the DC voltage generated by the voltage generator as the power supply voltage to the control circuit when the output voltage detected by the voltage detector has fallen to a predetermined value.

In this case, the first period is automatically set based on the voltage detected by the voltage detector. Thus, the operation of the control circuit can be stopped for a predetermined period while preventing the output voltage of the voltage converter from falling below a predetermined value.

(5) The third switch may stop the supply of the DC voltage from the voltage generator to the control circuit when the power supply voltage received by the control circuit reaches a predetermined value or more.

In this case, the third switch limits the time when the DC voltage is supplied from the voltage generator to the control circuit. Thus, the power consumption in the standby operation can be sufficiently reduced.

(6) Operations in the first and second periods may be repeatedly performed from the time point where the instructor issued an instruction to perform the standby operation to the time point where the instructor issues an instruction to perform the normal operation.

(7) The first period may be longer than the second period. In this case, the power consumption in the standby operation can be sufficiently reduced.

(8) The voltage converter may include a capacitive element that is charged at the output voltage.

In this case, the capacitive element is charged at the output voltage. Therefore, the rate of fall of the output voltage of the voltage converter decreases in the standby operation. Thus, the control circuit can be stopped for a longer time. As a result, the power consumption in the standby operation can be sufficiently reduced.

(9) The second switch may be closed when the instructor issues an instruction to perform the normal operation, and the third switch may be opened after being closed for a predetermined period.

In this case, when the instruction to perform the normal operation is issued, the second switch and the third switch supply the power supply voltage to the control circuit. This enables the quick transition from the standby operation to the normal operation. The third switch is opened after being closed for the predetermined period of time such that the power consumption is inhibited from increasing.

(10) The voltage converter may include a transformer having a first winding connected to the voltage generator via the first switch while having a second winding and a third winding, a first rectification/smoothing circuit that rectifies and smooths a voltage generated at the second winding, and a second rectification/smoothing circuit that rectifies and smooths a voltage generated at the third winding, in which the instructor may operate with electric power based on an output voltage of the first rectification/smoothing circuit, and the control circuit may be connected to receive an output voltage of the second rectification/smoothing circuit as the power supply voltage via the second switch.

In this case, the control circuit and the instructor respectively receive the power supply voltage in different paths. Thus, the instructor is prevented from being affected by noise on the primary side of the transformer.

(11) The first rectification/smoothing circuit may include a first capacitive element, and the second rectification/smoothing circuit may include a second capacitive element, and the first capacitive element may have a capacitance value larger than that of the second capacitive element.

In this case, in the standby operation, the first capacitive element is charged at the output voltage of the first rectification/smoothing circuit. The second capacitive element is charged at the output voltage of the second rectification/smoothing circuit. The capacitance value of the first capacitive element is larger than the capacitance value of the second capacitive element. Therefore, in the standby mode, the rate of fall of the output voltage of the first rectification/smoothing circuit falls below the rate of fall of the output voltage of the second rectification/smoothing circuit. Thus, the control circuit can be stopped for a longer period of time. As a result, the power consumption in the standby mode can be sufficiently reduced.

(12) According to another aspect of the present invention, a power supply device can be switched to a normal operation for supplying electric power to the circuit connected to the power supply device by an instruction issued by an instructor that operates with electric power from the power supply device and a standby mode for not supplying electric power to a circuit connected to the power supply device, and includes a voltage generator that generates a DC voltage, a voltage converter that is connected to the voltage generator, and converts the DC voltage generated by the voltage generator into a DC voltage for supplying electric power to the circuit connected to the power supply device and the instructor, and a control circuit that controls the voltage converter such that an output voltage of the voltage converter has a first value in the normal operation, and controls the voltage converter such that an output voltage of the voltage converter falls to a second value lower than the first value when the instructor issues an instruction to perform the standby operation.

In the power supply device, in the normal operation, the control circuit controls the voltage converter such that the output voltage of the voltage converter has the first value. If the instructor issues the instruction to perform the standby mode, the control circuit controls the voltage converter such that the output voltage of the voltage converter falls to the second value lower than the first value. In this case, the instructor is operable with the electric power based on the falling output voltage of the voltage converter. Therefore, the instructor can issue the instruction to perform the normal operation.

Thus, in the standby operation, the instructor operates by the voltage lower than that in the normal operation. Therefore, the power consumptions of the voltage converter and the instructor are reduced. The result enables the instructions to perform the normal operation and the standby mode to be issued while sufficiently reducing power consumption in the standby operation.

(13) According to still another aspect of the present invention, a method for controlling a power supply device that can be switched to a normal operation for supplying electric power to a circuit connected to the power supply device by an instruction issued by an instructor that operates with electric power from the power supply device and a standby operation for not supplying electric power to the circuit connected to the power supply device, in which the power supply device includes a voltage generator that generates a DC voltage, a voltage converter that is connected to the voltage generator via the first switch, and converts the DC voltage generated by the voltage generator into a DC voltage for supplying electric power to the circuit connected to the power supply device and the instructor, and a control circuit that is operable to control an opening and closing operation of the first switch by receiving an output voltage of the voltage converter as a power supply voltage via a second switch, the control method including the steps of operating the control circuit by closing the second switch in the normal operation, and opening the second switch when a first period has elapsed since the instructor issued an instruction to perform the standby mode, to stop an operation of the control circuit.

According to the method for controlling the power supply device, in the normal operation, the control circuit operates to control the opening and closing operation of the first switch. Thus, the voltage converter converts the DC voltage generated by the voltage generator into the DC voltage for supplying the electric power to the circuit connected to the power supply device. In this case, the second switch is closed such that the control circuit receives the output voltage of the voltage converter as the power supply voltage via the second switch. The instructor operates with the electric power based on the output voltage of the voltage converter.

When the first period has elapsed since the instructor issued the instruction to perform the standby operation, the second switch is opened. Thus, the control circuit stops operating such that the opening and closing operation of the first switch is not performed. As a result, the output voltage of the voltage converter falls. In this case, the instructor is operable with the electric power based on the falling output voltage of the voltage converter. Therefore, the instructor can issue the instruction to perform the normal operation.

Thus, in the first period in the standby operation, the electric power from the voltage generator is not consumed in the voltage converter and the control circuit. The instructor is in an operable state. The result enables the transition from the standby mode to the normal operation, and sufficiently reduces power consumption in the standby operation.

(14) According to a further aspect of the present invention, a method for controlling a power supply device that can be switched to a normal operation for supplying electric power to a circuit connected to the power supply device by an instruction issued by an instructor that operates with electric power from the power supply device and a standby mode for not supplying electric power to the circuit connected to the power supply device, in which the power supply device includes a voltage generator that generates a DC voltage, and a voltage converter that is connected to the voltage generator, and converts a DC voltage generated by the voltage generator into a DC voltage for supplying electric power to the circuit connected to the power supply device and the instructor, and the control method includes the steps of controlling the voltage converter such that an output voltage of the voltage converter has a first value in the normal operation, and controlling the voltage converter such that an output voltage of the voltage converter falls to a second value lower than the first value when the instructor issues an instruction to perform the standby mode.

According to the method for controlling the power supply device, in the normal operation, the control circuit controls the voltage converter such that the output voltage of the voltage converter has the first value. If the instructor issues the instruction to perform the standby operation, the control circuit controls the voltage converter such that the output voltage of the voltage converter falls to the second value lower than the first value. In this case, the instructor is operable with the electric power based on the falling output voltage of the voltage converter. Thus, the instructor can issue the instruction to perform the normal operation.

Thus, in the standby operation, the instructor operates by the voltage lower than that in the normal operation. Therefore, the power consumptions of the voltage converter and the instructor are reduced. The result enables the instructions to perform the normal operation and the standby mode to be issued while sufficiently reducing power consumption in the standby operation.

### [Advantageous Effects of Invention]

According to the present invention, the transition from a standby operation to a normal operation is enabled, and power consumption in the standby mode is sufficiently reduced.

### [Brief Description of Drawings]

[FIG. 1] FIG. 1 is a circuit diagram illustrating a configuration of electrical equipment including a power supply device according to a first embodiment.
[FIG. 2] FIG. 2 is a timing chart for illustrating an operation of the power supply device illustrated in Fig. 1.
[FIG. 3] FIG. 3 is a flowchart illustrating a starting operation of the power supply device illustrated in Fig. 1.
[FIG. 4] FIG. 4 is a flowchart illustrating a standby operation of the power supply device illustrated in Fig. 1.
[FIG. 5] FIG. 5 is a circuit diagram illustrating a configuration of electrical equipment including a power supply device according to a second embodiment.
[FIG. 6] FIG. 6 is a flowchart illustrating a standby operation of the power supply device illustrated in Fig. 5.
[FIG. 7] FIG. 7 is a circuit diagram illustrating a configuration of electrical equipment including a power supply device according to a third embodiment.

### [Description of Embodiments]

### (1) First Embodiment

### (1-1) Electrical Equipment Including Power Supply Device

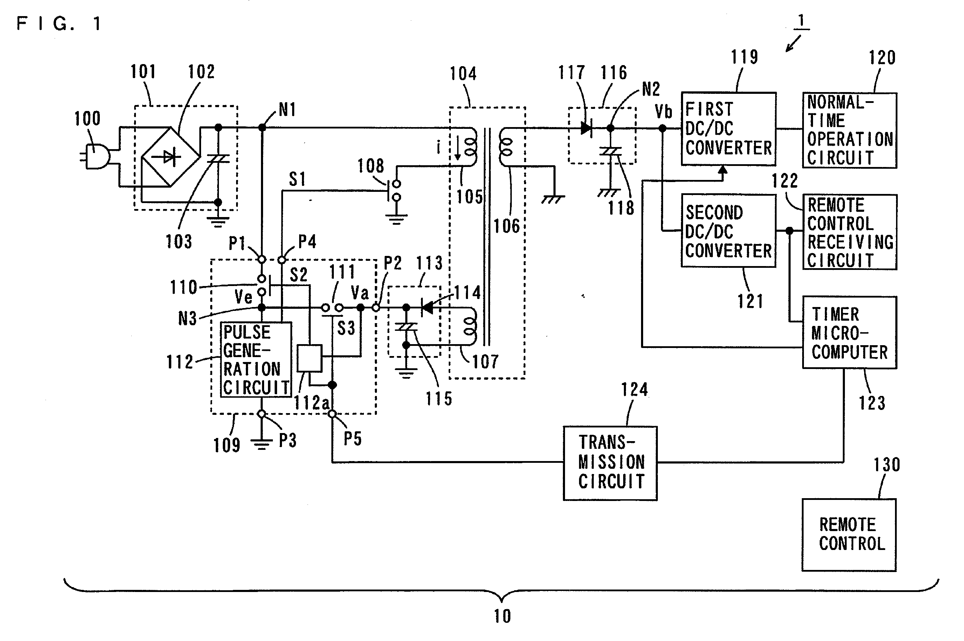

Electrical equipment including a power supply device according to a first embodiment will be described. Fig. 1 is a circuit diagram illustrating a configuration of the electrical equipment including the power supply device according to the first embodiment.

An AC (Alternating Current) code plug 100 is a connector connected to a household AC outlet for obtaining AC electric power from a commercial AC power supply. A rectification/smoothing circuit 101 is connected to the AC code plug 100. The rectification/smoothing circuit 101 includes a rectifying bridge diode 102 and a smoothing capacitor 103. A pair of terminals of the rectifying bridge diode 102 is connected to the AC code plug 100, and the other pair of terminals is connected to both ends of the smoothing capacitor 103. One end of the smoothing capacitor 103 is connected to a node N1, and the other end thereof is connected to a primary ground terminal.

The rectification/smoothing circuit 101 converts an AC voltage obtained by the AC code plug 100 into a DC voltage. In this case, the rectifying bridge diode 102 feeds an effective energy component of an AC current to one end of the smoothing capacitor 103. Thus, the AC voltage is converted into the DC voltage using a charging function of the smoothing capacitor 103.

A transformer 104 is a switching transformer. The transformer 104 includes a main winding 105, a secondary output winding 106, and an auxiliary voltage winding 107. One end of the main winding 105 is connected to the node N1, and the other end thereof is connected to the primary ground terminal via a switching element 108. One end of the secondary output winding 106 is connected to a rectification/smoothing circuit 116 for secondary output winding, and the other end thereof is connected to a secondary ground terminal.

One end of the auxiliary voltage winding 107 is connected to a rectification/smoothing circuit 113 for auxiliary voltage winding, and the other end thereof is connected to the primary ground terminal.

The main winding 105 stores the DC voltage obtained by the rectification/smoothing circuit 101 as energy. The secondary output winding 106 receives energy of the main winding 105 by magnetic coupling, and supplies electric power to the rectification/smoothing circuit 116 for secondary output winding. The auxiliary voltage winding 107 supplies electric power required to operate a control IC (Integrated Circuit) 109 for switching power supply (hereinafter referred to as a control IC), described below, to the rectification/smoothing circuit 113 for auxiliary voltage winding.

The switching element 108 is a switch that is switched to an open state and a closed state based on a pulse signal S1 fed from the control IC 109. When the switching element 108 is in the closed state, a voltage is applied to both ends of the main winding 105, and a current flows through the main winding 105. Thus, energy required on the secondary side is stored in the main winding 105. The energy stored in the main winding 105 is transmitted to the secondary output winding 106 in the open state of the switching element 108. Opening and closing timing of the switching element 108 is controlled in response to the switching control signal S1 output from the control IC 109. The switching element 108 is repeated between the open state and the closed state such that a pulse voltage is generated at the secondary output winding 106. Thus, energy on the primary side of the transformer 104 is transmitted to the secondary side by magnetic coupling.

A pulse voltage is generated at the auxiliary voltage winding 107 in response to an operation of the switching element 108, like at the secondary output winding 106. Thus, energy of the main winding 105 is transmitted to the auxiliary voltage winding 107 by magnetic coupling.

The rectification/smoothing circuit 113 for auxiliary voltage winding includes a rectifying diode 114 and a smoothing capacitor 115. The anode of the rectifying diode 114 is connected to one end of the auxiliary voltage winding 107, and the cathode thereof is connected to one end of the smoothing capacitor 115. The other end of the smoothing capacitor 115 is connected to the primary ground terminal. The rectifying diode 114 extracts only a positive component of the pulse voltage generated at the auxiliary voltage winding 107, and outputs the extracted positive component. The smoothing capacitor 115 converts an output voltage of the rectifying diode 114 into a DC voltage using a charging function. A DC voltage obtained by the rectification/smoothing circuit 113 for auxiliary voltage winding is supplied to the control IC 109.

The control IC 109 has power supply terminals P1 and P2, a ground terminal P3, an output terminal P4, and a control terminal P5, and includes a starting switch 110, an energy saving switch 111, a pulse generation circuit 112, and a switch control circuit 112a.

The power supply terminal P1 is connected to the node N1, and the power supply terminal P2 is connected to one end of the smoothing capacitor 115 in the rectification/smoothing circuit 113 for auxiliary voltage winding. The ground terminal P3 is connected to the primary ground terminal. The output terminal P4 is connected to a gate (a control terminal) of the switching element 108, and the control terminal P5 is connected to a timer microcomputer 123, described below, via a transmission circuit 124, described below.

The starting switch 110 is connected between the power supply terminal P1 and a node N3. The energy saving switch 111 is connected between the power supply terminal P2 and the node N3. The pulse generation circuit 112 is connected between the node N3 and the ground terminal P3. The pulse generation circuit 112 operates by a voltage at the node N3, to generate the pulse signal S1. The pulse signal S1 generated by the pulse generation circuit 112 is fed to the switching element 108 via the output terminal P4.

The switch control circuit 112a feeds a switch control signal S2 to the starting switch 110 based on a control signal fed to the control terminal P5 and a voltage at the power supply terminal P2. The starting switch 110 is switched between an open state and a closed state in response to the switch control signal S2. The energy saving switch 111 is switched between an open state and a closed state in response to a switch control signal S3 fed to the control terminal P5.

When the starting switch 110 enters the closed state, a DC voltage at the node N1 is supplied to the pulse generation circuit 112 as a starting voltage at the controller IC 109. The starting voltage at the control IC 109 is a voltage required to start the control IC 109. At this time, the energy saving switch 111 also enters the closed state. Thus, a voltage Va at the power supply terminal P2 rises. The switch control circuit 112a determines that the control IC 109 is in a starting state at the time point where the voltage Va at the power supply terminal P2 reaches a predetermined voltage VA (e.g., 14 V), and brings the starting switch 110 into the open state.

After the starting switch 110 enters the open state, a DC voltage obtained by the rectification/smoothing circuit 113 for auxiliary voltage winding is supplied to the pulse generation circuit 112 in the control IC 109.

The energy saving switch 111 is a switch for stopping the supply of the DC voltage from the rectification/smoothing circuit 113 for auxiliary voltage winding to the pulse generation circuit 112. The pulse generation circuit 112 can be taken as a load resistor that consumes electric power within the control IC 109. The energy saving switch 111 enters the open state such that the power consumption of the pulse generation circuit 112 is sufficiently reduced. Details of an operation of the energy saving switch 111 will be described below.

The rectification/smoothing circuit 116 for secondary output winding includes a rectifying diode 117 and a smoothing capacitor 118. The rectifying diode 117 extracts only a positive component of the pulse voltage generated at the secondary output winding 106, and outputs the extracted positive component. The smoothing capacitor 118 converts an output voltage of the rectifying diode 117 into a DC voltage of 12 volts, for example, using a charging function.

A capacitance value of the smoothing capacitor 118 in the rectification/smoothing circuit 116 for secondary output winding is larger than a capacitance value of the smoothing capacitor 115 in the rectification/smoothing circuit 113 for auxiliary voltage winding.

The DC voltage obtained by the rectification/smoothing circuit 116 for secondary output winding is supplied to a first DC/DC converter circuit 119 and a second DC/DC converter circuit 121.

The first DC/DC converter circuit 119 supplies electric power to a normal-time operation circuit 120 when the electrical equipment 1 performs a normal operation. When the electrical equipment 1 performs a standby operation, the first DC/DC converter circuit 119 does not supply electric power to the normal-time operation circuit 120. The normal-time operation circuit 120 performs various operations with the electric power supplied from the first DC/DC converter circuit 119. Thus, the electric power is consumed in the normal-time operation circuit 120.

The second DC/DC converter circuit 121 supplies electric power to a remote control receiving circuit 122 and a timer microcomputer 123 when the electrical equipment 1 performs the normal operation and when the electrical equipment 1 performs the standby operation.

The remote control receiving circuit 122 operates with the electric power supplied from the second DC/DC converter circuit 121, and can receive an infrared remote control signal transmitted from a remote control 130. The remote control receiving circuit 122 feeds various instructions to the normal-time operation circuit 120 and the timer microcomputer 123 based on the received remote control signal. The normal-time operation circuit 120 operates based on an instruction given from the remote control receiving circuit 122.

The timer microcomputer 123 operates with the electric power supplied from the second DC/DC converter circuit 121. The timer microcomputer 123 performs an arithmetic operation relating to a time such as measurement of an elapsed time based on the instruction given from the remote control receiving circuit 122 while feeding a control signal to the control terminal P5 of the control IC 109 via the transmission circuit 124. The transmission circuit 124 is composed of a photo coupler, for example.

Thus, the remote control receiving circuit 122 and the timer microcomputer 123 are required to operate even when the normal-time operation circuit 120 is stopped.

In the electrical equipment 1 illustrated in Fig. 1, portions excluding the normal-time operation circuit 120 constitute the power supply device 10.

In the present embodiment, the electrical equipment 1 is electrical equipment that is operated by the remote control 130. For example, the electrical equipment 1 is a recording/reproduction device such as a DVD (Digital Versatile) recorder or a hard disk recorder, a television receiver, audio equipment, or an air-conditioner. If the electrical equipment 1 is the recording/reproduction device, the normal-time operation circuit 120 includes a tuner, a demodulator, a decoder, a recording medium driving device and so on. If the electrical equipment 1 is the television receiver, the normal-time operation circuit 120 includes a tuner, a demodulator, a decoder, a display panel, a speaker and so on. If the electrical equipment 1 is the audio equipment, the normal-time operation circuit 120 includes a tuner, a demodulator, a decoder, a recording medium driving device, a speaker and so on. If the electrical equipment 1 is the air conditioner, the normal-time operation circuit 120 includes an outdoor heat exchanger, an indoor heat exchanger, a compressor, an air blower and so on.

### (1-2) Operation of Power Supply Device

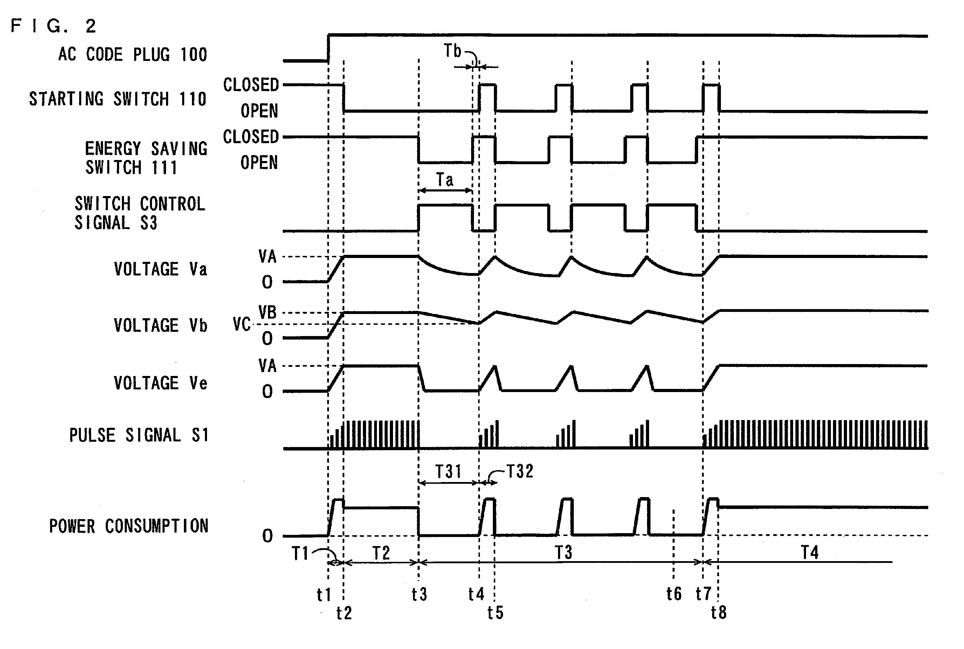

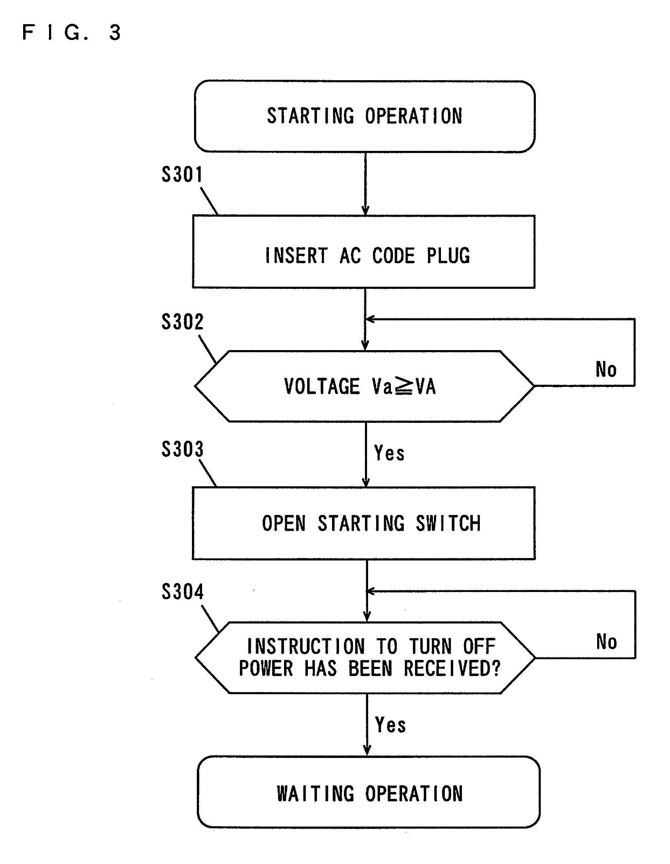

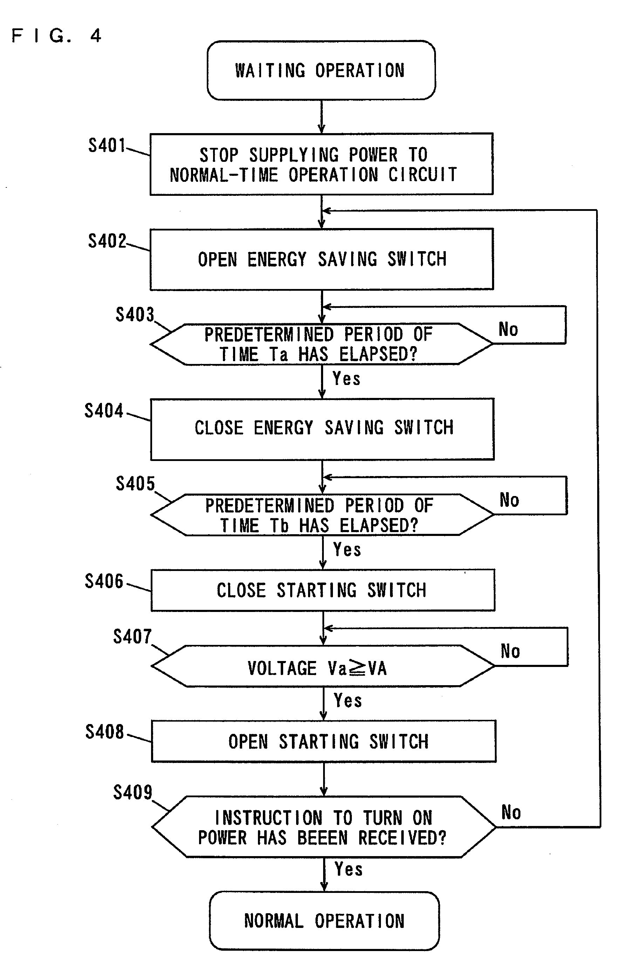

Fig. 2 is a timing chart for illustrating an operation of the power supply device illustrated in Fig. 1. Fig. 3 is a flowchart illustrating a starting operation of the power supply device illustrated in Fig. 1. Fig. 4 is a flowchart illustrating a standby operation of the power supply device illustrated in Fig. 1.

Fig. 2 illustrates schematic changes of a state of the AC code plug 100, a state of the starting switch 110, a state of the energy saving switch 111, a state of the switch control signal S3, the voltage Va at the power supply terminal P2, a voltage Vb at the node N2, a voltage Ve at the node N3, a state of the pulse signal S1, and power consumption.

A state where the AC code plug 100 is not inserted into the AC outlet (a state where it is disconnected from a commercial AC power supply) is indicated by a low level, and a state where the AC code plug 100 is inserted into the AC outlet (a state where it is connected to the commercial AC power supply) is indicated by a high level. For the states of the starting switch 110 and the energy saving switch 111, the closed state (ON state) is indicated by a high level, and the open state (OFF state) is indicated by a low level. In this example, the energy saving switch 111 enters the closed state (ON state) when the switch control signal S3 is at a low level, and enters the open state (OFF state) when the switch control signal S3 is at a high level. The switching element 108 enters the closed state (ON state) when the pulse signal S1 is at a high level, and enters the open state (OFF state) when the pulse signal S1 is at a low level.

The starting operation and the normal operation of the power supply device 10 will be first described with reference to Figs. 2 and 3.

In Fig. 2, let t1 be the time point where the AC code plug 100 is inserted into the AC outlet. Before the time point t1, the starting switch 110, the energy saving switch 111, and the switching element 108 are in the closed state (ON state). The switch control signal S3 is at the low level, the voltage Va at the power supply terminal P2, the voltage Vb at the node N2, and the voltage Ve at the node N3 are zero, and the power consumption is zero.

When the AC code plug 100 is inserted into the AC outlet at the time point t1 (step S301), the rectification/smoothing circuit 101 converts the AC voltage supplied from the commercial AC power supply into a DC voltage. Thus, the DC voltage is supplied to the node N1. At this time, the starting switch 110 and the energy saving switch 111 are in the closed state (ON state) such that the voltage Va at the power supply terminal P2 rises. The voltage Ve at the node N3 also rises. Thus, the pulse generation circuit 112 starts to operate, and the switch control circuit 112a starts to generate the pulse signal S1. When the pulse signal S1 is at the high level, the switching element 108 enters the closed state (ON state). At this time, a current i flows through the main winding 105 in the transformer 104. Thus, energy is stored in the main winding 105. When the pulse signal S1 is at the low level, the switching element 108 enters the open state (OFF state). The switching element 108 is repeated between the open state and the closed state in response to the pulse signal S1 such that energy of the main winding 105 is transmitted to the secondary output winding 106 and the auxiliary voltage winding 107 by magnetic coupling. As a result, the pulse voltage is generated at the secondary output winding 106 and the auxiliary voltage winding 107 in the transformer 104.

The rectification/smoothing circuit 116 for secondary output winding converts the pulse voltage at the secondary output winding 106 into a DC voltage. Thus, the voltage Vb at the node N2 rises. The rectification/smoothing circuit 113 for auxiliary voltage winding converts the pulse voltage at the auxiliary voltage winding 107 into a DC voltage. Therefore, in the starting operation, a voltage is fed to the pulse generation circuit 112 via the starting switch 110 and the energy saving switch 111. Power consumption in the starting operation is slightly higher than power consumption in the normal operation, described below.

At a time point t2 illustrated in Fig. 2, the voltage Va at the power supply terminal P2 and the voltage Ve at the node N3 reach the voltage VA. At this time, the voltage Vb at the node N2 becomes a voltage VB. The voltage VA is 14 V, for example. The voltage VB is 12 V, for example.

The switch control circuit 112a in the control IC 109 determines whether the voltage Va at the power supply terminal P2 has reached the voltage VA (step S302).

If the voltage Va at the power supply terminal P2 reaches the voltage VA, the switch control circuit 112a brings the starting switch 110 into the open state (OFF state) in response to the switch control signal S2 (step S303).

The power supply device 10 performs the starting operation in a period T1 from the time point t1 to the time point t2, and performs the normal operation in a period T2 from the time point t2 to a time point t3. At the time point t3, the remote control receiving circuit 122 receives an instruction to turn off power.

In the normal operation, the voltage Va at the power supply terminal P2 and the voltage Ve at the node N3 are the voltage VA, and the energy saving switch 111 is in the closed state (ON state). Thus, the pulse generation circuit 112 operates, to generate the pulse signal S1. The switching element 108 is repeated between the open state and the closed state in response to the pulse signal S1 such that energy of the main winding 105 is transmitted to the secondary output winding 106 and the auxiliary voltage winding 107 by magnetic coupling, like in the starting operation. As a result, the pulse voltage is generated at the secondary output winding 106 and the auxiliary voltage winding 107 in the transformer 104.

The rectification/smoothing circuit 116 for secondary output winding converts the pulse voltage at the secondary output winding 106 into a DC voltage, and feeds the DC voltage to the first DC/DC converter circuit 119 and the second DC/DC converter circuit 121. Thus, DC electric power is supplied from the first DC/DC converter circuit 119 to the normal-time operation circuit 120 while being supplied from the second DC/DC converter circuit 121 to the remote control receiving circuit 122 and the timer microcomputer 123. Therefore, the normal-time operation circuit 120, the remote control receiving circuit 122, and the timer microcomputer 123 operate. In this case, constant electric power is consumed in the power supply device 10.

The rectification/smoothing circuit 113 for auxiliary voltage winding converts the pulse voltage at the auxiliary voltage winding 107 into a DC voltage. Thus, the voltage Va at the power supply terminal P2 and the voltage Ve at the node N3 are maintained at the voltage VA. Therefore, the switch control circuit 112a operates by the voltage Va at the power supply terminal P2. The pulse generation circuit 112 operates by the voltage Ve at the node N3. The smoothing capacitor 115 is charged at the voltage VA.

In the normal operation, when the user turns off a power switch in the remote control 130 at any time point, the remote control receiving circuit 122 receives an instruction to turn off power from the remote control receiving circuit 122.

The timer microcomputer 123 determines whether the remote control receiving circuit 122 has received an instruction to turn off power from the remote control receiving circuit 122 (step S304). In Fig. 2, the remote control receiving circuit 122 receives an instruction to turn off power (an instruction to perform a standby operation) from the remote control receiving circuit 122 at the time point t3.

When the remote control receiving circuit 122 receives the instruction to turn off power from the remote control receiving circuit 122, the power supply device 10 transits to the standby mode.

The standby mode and the normal operation of the power supply device 10 will be described below with reference to Figs. 2 and 4.

When the power supply device 10 transits to the standby operation, the timer microcomputer 123 controls the first DC/DC converter circuit 119, to stop the supply of electric power to the normal-time operation circuit 120 (step S401).

The timer microcomputer 123 brings the switch control signal S3 into the high level. Thus, at the time point t3 illustrated in Fig. 2, the energy saving switch 111 enters the open state (OFF state) (step S402). As a result, no voltage is supplied to the node N3 in the control IC 109. More specifically, the voltage Ve at the node N3 becomes zero. Thus, the pulse generation circuit 112 stops operating such that the generation of the pulse signal S1 is stopped, as illustrated in Fig. 2.

In this case, the switching element 108 maintains the open state (OFF state) without performing an opening and closing operation. Therefore, no current i flows through the main winding 105. Thus, the transmission of energy from the main winding 105 to the secondary output winding 106 and the auxiliary voltage winding 107 is stopped. As a result, the voltage Vb at the node N2 also gradually falls. The voltage Va at the power supply terminal P2 gradually falls. The capacitance value of the smoothing capacitor 118 is larger than the capacitance value of the smoothing capacitor 115 such that the voltage Vb falls more gently than the voltage Va.

The timer microcomputer 123 determines whether a predetermined period of time Ta has elapsed from the time point where the energy saving switch 111 enters the open state (OFF state) (step S403). The predetermined period of time Ta is 15 sec, for example.

If the predetermined period of time Ta has elapsed from the time point where the energy saving switch 111 enters the open state (OFF state), the timer microcomputer 123 brings the switch control signal S3 into the low level. Thus, the energy saving switch 111 enters the closed state (ON state) (step S404).

Further, the timer microcomputer 123 determines whether a predetermined period of time Tb has elapsed from the time point where the energy saving switch 111 enters the closed state (ON state) (step S405). The predetermined period of time Tb is 30 µsec, for example.

The above-mentioned predetermined periods of time Ta and Tb are set to periods of time elapsed from the time point where the energy saving switch 111 enters the open state (ON state) until the voltage Vb at the node N2 falls to a predetermined voltage VC. If the voltage Vb at the node N2 is the voltage VC or more, the remote control receiving circuit 122 and the timer microcomputer 123 are operable.

If the predetermined period of time Tb has elapsed from the time point where the energy saving switch 111 enters the closed state (ON state), the timer microcomputer 123 feeds a control signal for bringing the starting switch 110 into the closed state (ON state) to the switch control circuit 112a via the transmission circuit 124. The switch control circuit 112a brings the starting switch 110 into the closed state (ON state) in response to the switch control signal S2 at a time point t4 illustrated in Fig. 2 (step S406).

In this case, a voltage is supplied to the node N3 in the controller IC 109. Thus, the pulse generation circuit 112 starts to operate again, to generate the pulse signal S1, as illustrated in Fig. 2. The voltage Va at the power supply terminal P2 and the voltage Vb at the node N2 rise.

The switch control circuit 112a in the control IC 109 determines whether the voltage Va at the power supply terminal P2 has reached the voltage VA (step S407). If the voltage Va at the power supply terminal P2 has reached the voltage VA, the switch control circuit 112a brings the starting switch 110 into the open state (OFF state) in response to the switch control signal S2 at a time point t5 illustrated in Fig. 2 (step S408).

The timer microcomputer 123 determines whether the remote control receiving circuit 122 has received an instruction to turn on power from the remote control 130 (step S409). If the remote control receiving circuit 122 has not received the instruction to turn on power from the remote control 130, the processing returns to step S402. In step S402, the timer microcomputer 123 brings the energy saving switch 111 into the open state (OFF state). The time point where the energy saving switch 111 enters the open state may be the same as the time point where the starting switch 110 enters the open state in step S408.

In a period T31 from the time point t3 to the time point t4, electric power is supplied to the remote control receiving circuit 122 and the timer microcomputer 123 via the first DC/DC converter circuit 119 by a voltage at which the smoothing capacitor 118 in the rectification/smoothing circuit 116 for secondary output winding has been charged. In this case, energy is not transmitted from the main winding 105 in the transformer 104 to the secondary output winding 106 and the auxiliary voltage winding 107. Therefore, in a period T31, power consumption in the power supply device 10 is substantially zero. Power consumption in a period T32 from the time point t4 to the time point t5 becomes slightly higher than power consumption in the normal operation, described below. Hereinafter, operations in the period T31 and the period T32 are repeated.

When the user turns on a power switch of the remote control 130 at any time point, the remote control receiving circuit 122 receives an instruction to turn on power from the remote control 130. In Fig. 2, the remote control receiving circuit 122 receives the instruction to turn on power (an instruction to perform the normal operation) from the remote control 130 at the time point t6.

In step S409 illustrated in Fig. 4, if the remote control receiving circuit 122 receives the instruction to turn on power from the remote control 130, the power supply device 10 transits to the normal operation.

In the normal operation, the timer microcomputer 123 brings the switch control signal S3 into the low level. Thus, the energy saving switch 111 enters the closed state (ON state), as illustrated in Fig. 2. Then, the timer microcomputer 123 feeds a control signal for bringing the starting switch 110 into the closed state (ON state) to the switch control circuit 112a via the transmission circuit 124. Thus, the starting switch 110 enters the closed state (ON state) at a time point t7 illustrated in Fig. 2.

In this case, a voltage is supplied to the node N3 in the control IC 109. Thus, the pulse generation circuit 112 starts to operate again, to start to generate the pulse signal S1, as illustrated in Fig. 2. The voltage Va at the power supply terminal P2, the voltage Vb at the node N2, and the voltage Ve at the node N3 rise. At a time point t8 illustrated in Fig. 2, the voltage Va at the power supply terminal P2 and the voltage Ve at the node N3 reach the voltage VA. At this time, the voltage Vb at the node N2 becomes the voltage VB. If the voltage Va at the power supply terminal P2 has reached the voltage VA, the switch control circuit 112a brings the starting switch 110 into the open state (OFF state) in response to the switch control signal S2. The switch control signal S3 is maintained at the low level. Thus, the energy saving switch 111 remains in the closed state (ON state). The normal operation in the period T4 following the time point t8 is similar to the normal operation in the period T2.

In this case, the timer microcomputer 123 controls the first DC/DC converter circuit 119 to supply the electric power to the normal-time operation circuit 120.

### (1-3) Effects of Embodiment

As described above, in the power supply device 10 according to the first embodiment, the energy saving switch 111 enters the open state for each predetermined period in the standby mode. In a period during which the energy saving switch 111 is in the open state, no current i is supplied to the transformer 104. In this case, electric power is supplied to the remote control receiving circuit 122 and the timer microcomputer 123 via the second DC/DC converter circuit 121 by a voltage at which the smoothing capacitor 118 in the rectification/smoothing circuit 116 for secondary output winding has been charged. No voltage is supplied to the pulse generation circuit 112 in the control IC 109. Thus, the power consumption in the standby operation of the power supply device 10 can be sufficiently reduced.

When the predetermined period Ta has elapsed since the energy saving switch 111 entered the open state, the energy saving switch 111 enters the closed state. When the predetermined period of time Tb has further elapsed, the starting switch 110 enters the closed state. Thus, the pulse generation circuit 112 operates before the voltage Vb at the node N2 falls below the voltage VC. As a result, the voltage Vb at the node N2 rises to the voltage VB. Therefore, in the standby operation, the supply of the electric power to the remote control receiving circuit 122 and the timer microcomputer 123 is not stopped.

The power supply device 10 according to the present embodiment can receive the instruction from the remote control 130 while sufficiently reducing the power consumption in the standby operation.

### (2) Second Embodiment

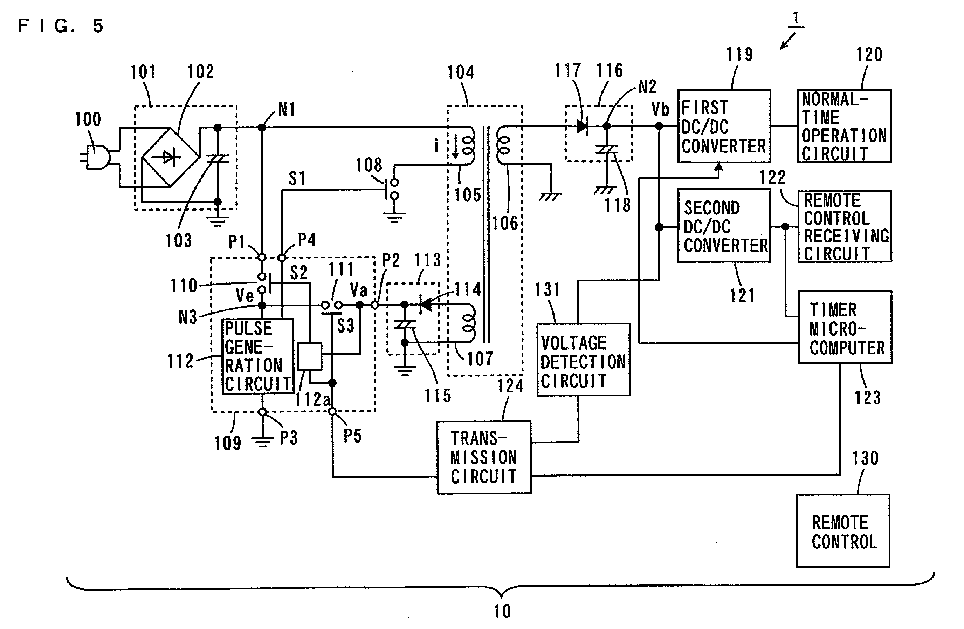

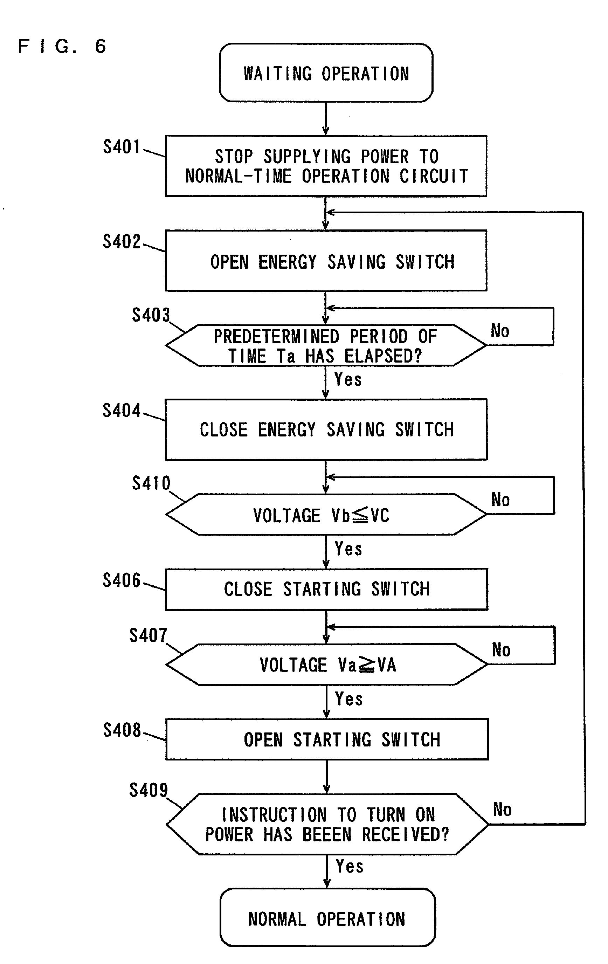

Electrical equipment including a power supply device according to a second embodiment will be described. Fig. 5 is a circuit diagram illustrating a configuration of the electrical equipment including the power supply device according to the second embodiment. Fig. 6 is a flowchart illustrating a standby operation of the power supply device according to the second embodiment.

The power supply device 10 illustrated in Fig. 5 differs from the power supply device 10 illustrated in Fig. 1 in that a voltage detection circuit 131 is further provided. The voltage detection circuit 131 detects a voltage Vb at a node N2, and determines whether the voltage Vb has fallen to a voltage VC. The voltage detection circuit 131 feeds a control signal for bringing a starting switch 110 into a closed state (ON state) to a switch control circuit 112a in a control IC 109 via a transmission circuit 124.

The standby mode illustrated in Fig. 6 differs from the standby mode illustrated in Fig. 4 in that step S410 is executed instead of step S405 illustrated in Fig. 4. In step S410, the voltage detection circuit 131 determines whether the voltage Vb has fallen to the voltage VC. The voltage VC is 4 V, for example.

If the voltage Vb has fallen to the voltage VC, the voltage detection circuit 131 feeds the control signal for bringing the starting switch 110 into a closed state (ON state) to the switch control circuit 112a via the transmission circuit 124. The switch control circuit 112a brings the starting switch 110 into a closed state (ON state) in response to a switch control signal S2 at a time point t4 illustrated in Fig. 2 (step S406).

In this case, a voltage is supplied to a node N3 in the control IC 109. Thus, a pulse generation circuit 112 starts to operate again, to generate a pulse signal S1, as illustrated in Fig. 2. A voltage Va at a power supply terminal P2, the voltage Vb at the node N2, and a voltage Ve at the node N3 rise.

Another operation of the power supply device 10 according to the second embodiment is similar to an operation corresponding to the power supply device 10 according to the first embodiment.

As described above, in the power supply device 10 according to the second embodiment, an energy saving switch 111 also enters an open state for each predetermined period in a standby operation. In a period during which the energy saving switch 111 is in the open state, no current i is supplied to a transformer 104. In this case, electric power is supplied to a remote control receiving circuit 122 and a timer microcomputer 123 via a second DC/DC converter circuit 121 by a voltage at which a smoothing capacitor 118 in a rectification/smoothing circuit 116 for secondary output winding has been charged. No voltage is supplied to the pulse generation circuit 112 in the control IC 109. Therefore, power consumption in the standby operation of the power supply device 10 can be sufficiently reduced.

When a predetermined period of time Ta has elapsed since the energy saving switch 111 entered the open state, the energy saving switch 111 enters a closed state. When the voltage Vb at the node N2 has fallen to the voltage VC, the starting switch 110 enters a closed state. Thus, the pulse generation circuit 112 operates before the voltage Vb at the node N2 falls below the voltage VC. As a result, the voltage Vb at the node N2 rises to a voltage VB. Therefore, the supply of the electric power to the remote control receiving circuit 122 and the timer microcomputer 123 is not stopped in the standby operation.

Thus, the power supply device 10 according to the present embodiment can receive an instruction from a remote control 130 while sufficiently reducing the power consumption in the standby operation.

### (3) Third Embodiment

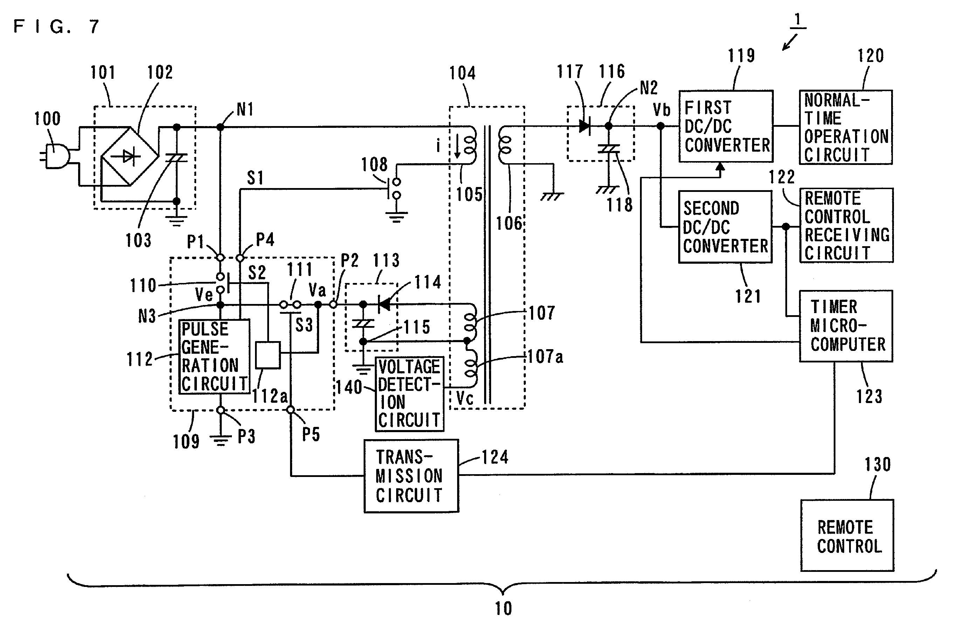

Electrical equipment including a power supply device according to a third embodiment will be described. Fig. 7 is a circuit diagram illustrating a configuration of the electrical equipment according to the third embodiment.

The power supply device 10 illustrated in Fig. 7 differs from the power supply device 10 illustrated in Fig. 5 in that a transformer 104 further includes an auxiliary winding for voltage detection 107a, and a voltage detection circuit 140 is provided instead of the voltage detection circuit 131. One end of the auxiliary winding for voltage detection 107a is connected to a primary ground terminal, and the other end thereof is connected to the voltage detection circuit 140. The voltage detection circuit 140 detects a voltage Vc at the auxiliary winding for voltage detection 107a, and determines whether the voltage Vc has fallen to a voltage VD. If the voltage Vc has fallen to the voltage VD, the voltage detection circuit 140 feeds a control signal for bringing a starting switch 110 into a closed state (ON state) to a switch control circuit 112a in a control IC 109 via a transmission circuit 124. The voltage VD is set to the voltage Vc at the auxiliary winding for voltage detection 107a when a voltage Vb at a node N2 has fallen to a voltage VC.

In this case, a voltage is supplied to a node N3 in the control IC 109. Thus, a pulse generation circuit 112 starts to operate again, to generate a pulse signal S1. A voltage Va at a power supply terminal P2, the voltage Vb at the node N2, and a voltage Ve at the node N3 rise.

Another operation of the power supply device 10 according to the third embodiment is similar to an operation corresponding to the power supply device 10 according to the second embodiment.

In the power supply device 10 according to the third embodiment, a pulse generation circuit 112 also operates before the voltage Vb at the node N2 falls below the voltage VC after an energy saving switch 111 enters an open state. As a result, the voltage Vb at the node N2 rises to a voltage VB. Therefore, the supply of electric power to a remote control receiving circuit 122 and a timer microcomputer 123 is not stopped in a standby operation.

Thus, the power supply device 10 according to the present embodiment can receive an instruction from a remote control 130 while sufficiently reducing power consumption in the standby operation.

### (4) Other Embodiments

(a) Each of the switching element 108, the starting switch 110, and the energy saving switch 111 may be a semiconductor switch such as a transistor or may be a mechanical switch. Various switches, which can be switched between an open state and a closed state, can be used. Each of the switching element 108, the starting switch 110, and the energy saving switch 111 may be controlled with hardware such as an electronic circuit, or may be controlled with software such as a computer program executed by a CPU (Central Processing Unit).

(b) While the period of time Ta elapsed since the energy saving switch 111 entered an open state until it enters a closed state is 15 sec, for example, in the above-mentioned first embodiment, the present invention is not limited to this. The period of time Ta may have another value. The energy saving switch 111 preferably enters a closed state before the starting switch 110 enters a closed state.

(c) While the period of time Tb elapsed since the energy saving switch 111 entered a closed state until the starting switch 110 enters a closed state is 30 µsec, for example, in the above-mentioned first embodiment, the present invention is not limited to this. The period of time Tb may have another value if a secondary-side voltage is maintained at a required value or more depending on a configuration on the secondary side of the transformer 104.

(d) While the starting switch 110 is closed based on the voltage Vb at the node N2 in the above-mentioned second embodiment, the present invention is not limited to this.

For example, the starting switch 110 may be closed based on the voltage Va at the power supply terminal P2. In this case, it is determined based on the voltage Va whether a voltage supplied to the remote control receiving circuit 122 and the timer microcomputer 123 has fallen below a predetermined value. The switch control circuit 112a determines whether the voltage Va has fallen to 0.1 V, for example, and closes the starting switch 110 in response to the switch control signal S2 if the voltage Va has fallen to 0.1 V. When an output voltage of the rectification/smoothing circuit 113 for auxiliary voltage winding falls to 0.1 V after the switching element 108 is switched to a state where no current is supplied to the main winding 105 in the transformer 104, therefore, the switching element 108 is switched to a state where a current is supplied to the main winding 105 in the transformer 104. As a result, the remote control receiving circuit 122 and the timer microcomputer 123 are prevented from stopping operating due to the fall of an output voltage of the rectification/smoothing circuit 116 for secondary output winding.

The starting switch 110 may be closed based on a voltage at the secondary output winding 106 in the transformer 104. In this case, it is determined based on the voltage at the secondary output winding 106 whether a voltage supplied to the remote control receiving circuit 122 and the timer microcomputer 123 has fallen below the predetermined value.

(e) While the energy saving switch 111 is provided inside the control IC 109 in the above-mentioned first to third embodiments, the present invention is not limited to this. The energy saving switch 111 may be provided outside the control IC 109 as a hardware configuration separate from the control IC 109.

(f) While the voltage VA is 14 V, for example, the voltage VB is 12 V, for example, and the voltage VC is 4 V, for example, in the above-mentioned first to third embodiments, the present invention is not limited to these. The voltage VA, the voltage VB, and the voltage VC may respectively have other values.

(g) While the power supply device 10 has a flyback-type power supply system in the above-mentioned first to third embodiments, the present invention is not limited to this. The power supply system of the power supply device 10 may be of a forward type, a multi-element type such as a push-pull type, a half-bridge type, or a full-bridge type, or a resonance type such as a voltage resonance type or a current resonance type. The power supply system of the power supply device 10 may be a step-down chopper, a step-up chopper, or a charge pump, or may be of a non-insulation type such as a synchronous rectification type. Thus, the present invention is applicable to power supply devices having all power supply systems.

(h) While the power supply device 10 transits from the normal operation to the standby operation by the operation of the remote control 130 in the above-mentioned first to third embodiments, the power supply device according to the present invention is not limited to this. For example, the power supply device 10 may automatically transit from the normal operation to the standby operation using a timer. In this case, the remote control receiving circuit 122 need not be provided.

(i) While timing at which the starting switch 110 is brought into a closed state (ON state) is determined using the control signal from the timer microcomputer 123 in the above-mentioned first to third embodiments, the present invention is not limited to this. An operational circuit or a timer circuit may be provided inside the control IC 109. In this case, the operational circuit or the timer circuit detects that the energy saving switch 111 has entered a closed state (ON state), and the starting switch 110 then automatically transits to a closed state (ON state).

The power supply device 10 is applicable to the electrical equipment 1 such as a computer, a copying machine, or a facsimile device serving as a server, for example. If the electrical equipment 1 is the server, the normal-time operation circuit 120 is a main body portion of a computer other than the power supply device 10. The power supply device 10 serving as the server transits from a normal operation to a standby state using a programmed timer. If the electrical equipment 1 is the copying machine, the normal-time operation circuit 120 includes an optical reader and a printer or the like. The power supply device 10 in the copying machine transits from a normal operation to a standby operation using a timer when the copying machine is not operated for a predetermined period of time. Further, if the electrical equipment 1 is the facsimile device, the normal-time operation circuit 120 includes a printer. The facsimile device includes a communicator. Electric power is also supplied to the communicator even in a standby operation of the power supply device 10. The power supply device 10 in the facsimile device transits from a normal operation to the standby operation using a timer when the facsimile device is not operated for a predetermined period of time. If the communicator in the facsimile device performs a receiving operation, the power supply device 10 transits from the standby operation to the normal operation.

The power supply device 10 is applicable to various types of electrical equipment 1 such as an electric rice-cooker, an electric jug, and an electric washer.

### (5) Correspondences between Constituent Elements in the Claims and Parts in Embodiments

In the following paragraph, non-limiting examples of correspondences between various elements recited in the claims below and those described above with respect to various embodiments of the present invention are explained.

In the embodiments, described above, the rectification/smoothing circuit 101 is an example of a voltage generator, the switching element 108 is an example of a first switch, the transformer 104, the rectification/smoothing circuit 116 for secondary output winding, and the rectification/smoothing circuit 113 for auxiliary voltage winding are examples of a voltage converter.

The energy saving switch 111 is an example of a second switch, the pulse generation circuit 112 and the switch control circuit 112a are example of a control circuit, the remote control receiving circuit 122 is an example of an instructor, the timer microcomputer 123, the voltage detection circuit 131, or the voltage detection circuit 140 is an example of a switch controller, and the starting switch 110 is an example of a third switch.

Further, the timer microcomputer 123 is an example of a timer, the voltage detection circuit 131 or the voltage detection circuit 140 is an example of a voltage detector, the rectification/smoothing circuit 116 for secondary output winding is an example of a first rectification/smoothing circuit, the rectification/smoothing circuit 113 for auxiliary voltage winding is an example of a second rectification/smoothing circuit, the smoothing capacitor 118 is an example of a capacitive element or a first capacitive element, the smoothing capacitor 115 is an example of a second capacitive element, the voltage VB is an example of a first value, and the voltage VC is an example of a second value.

As each of various elements recited in the claims, various other elements having configurations or functions described in the claims can also be used.

### [Industrial Applicability]

The present invention is applicable to various types of electrical equipment or electronic equipment requiring power supply management.

## Claims

1. A power supply device that can be switched to a normal operation for supplying electric power to a circuit connected to said power supply device by an instruction issued by an instructor that operates with electric power from said power supply device and a standby operation for not supplying electric power to the circuit connected to said power supply device, comprising:
a voltage generator that generates a DC voltage;
a first switch;
a voltage converter that is connected to said voltage generator via said first switch, and converts the DC voltage generated by said voltage generator into a DC voltage for supplying electric power to the circuit connected to said power supply device and said instructor;
a second switch;
a control circuit that is operable to control an opening and closing operation of said first switch by receiving an output voltage of said voltage converter as a power supply voltage via said second switch; and
a switch controller that closes said second switch in said normal operation, and opens said second switch when a first period has elapsed since said instructor issued an instruction to perform said standby operation.

2. The power supply device according to claim 1, further comprising
a third switch that supplies the DC voltage generated by said voltage generator as the power supply voltage to said control circuit in a second period following said first period.

3. The power supply device according to claim 2, further comprising a timer that measures an elapsed time from the time point where said second switch is opened,
wherein said third switch supplies the DC voltage generated by said voltage generator as the power supply voltage to said control circuit when the elapsed time measured by said timer reaches a predetermined time.

4. The power supply device according to claim 2, further comprising a voltage detector that detects an output voltage of said voltage converter,
wherein said third switch supplies the DC voltage generated by said voltage generator as the power supply voltage to said control circuit when the output voltage detected by said voltage detector has fallen to a predetermined value.

5. The power supply device according to claim 2, wherein said third switch stops the supply of a DC voltage from said voltage generator to said control circuit when said power supply voltage received by said control circuit reaches a predetermined value or more.

6. The power supply device according to claim 2, wherein operations in said first and second periods are repeatedly performed from the time point where said instructor issued an instruction to perform said standby operation to the time point where said instructor issues an instruction to perform said normal operation.

7. The power supply device according to claim 2, wherein said first period is longer than said second period.

8. The power supply device according to claim 1, wherein said voltage converter includes a capacitive element that is charged at said output voltage.

9. The power supply device according to claim 1, wherein said second switch is closed when said instructor issues an instruction to perform said normal operation, and said third switch is opened after being closed for a predetermined period.

10. The power supply device according to claim 1, wherein
said voltage converter includes
a transformer having a first winding connected to said voltage generator via said first switch while having a second winding and a third winding,
a first rectification/smoothing circuit that rectifies and smooths a voltage generated at said second winding, and
a second rectification/smoothing circuit that rectifies and smooths a voltage generated at said third winding,
wherein said instructor operates with electric power based on an output voltage of said first rectification/smoothing circuit, and
said control circuit is connected to receive an output voltage of said second rectification/smoothing circuit as the power supply voltage via said second switch.

11. The power supply device according to claim 10, wherein
said first rectification/smoothing circuit includes a first capacitive element, and said second rectification/smoothing circuit includes a second capacitive element, and
said first capacitive element has a capacitance value larger than that of said second capacitive element.

12. A power supply device that can be switched to a normal operation for supplying electric power to a circuit connected to said power supply device by an instruction issued by an instructor that operates with electric power from said power supply device and a standby operation for not supplying electric power to the circuit connected to said power supply device, comprising:
a voltage generator that generates a DC voltage;
a voltage converter that is connected to said voltage generator, and converts the DC voltage generated by said voltage generator into a DC voltage for supplying electric power to the circuit connected to said power supply device and said instructor; and
a control circuit that controls said voltage converter such that an output voltage of said voltage converter has a first value in said normal operation, and controls said voltage converter such that an output voltage of said voltage converter falls to a second value lower than said first value when said instructor issues an instruction to perform said standby operation.

13. A method for controlling a power supply device that can be switched to a normal operation for supplying electric power to a circuit connected to said power supply device by an instruction issued by an instructor that operates with electric power from said power supply device and a standby operation for not supplying electric power to the circuit connected to said power supply device, wherein
said power supply device includes
a voltage generator that generates a DC voltage,
a voltage converter that is connected to said voltage generator via said first switch, and converts the DC voltage generated by said voltage generator into a DC voltage for supplying electric power to the circuit connected to said power supply device and said instructor, and
a control circuit that is operable to control an opening and closing operation of the first switch by receiving an output voltage of said voltage converter as a power supply voltage via a second switch,
said control method comprising the steps of:
operating said control circuit by closing said second switch in said normal operation; and
opening said second switch when a first period has elapsed since said instructor issued an instruction to perform said standby operation, to stop an operation of said control circuit.

14. A method for controlling a power supply device that can be switched to a normal operation for supplying electric power to a circuit connected to said power supply device by an instruction issued by an instructor that operates with electric power from said power supply device and a standby operation for not supplying electric power to the circuit connected to said power supply device, wherein
said power supply device includes
a voltage generator that generates a DC voltage, and
a voltage converter that is connected to said voltage generator, and converts a DC voltage generated by said voltage generator into a DC voltage for supplying electric power to the circuit connected to said power supply device and said instructor,
said control method comprising the steps of:
controlling said voltage converter such that an output voltage of said voltage converter has a first value in said normal operation; and
controlling said voltage converter such that an output voltage of said voltage converter falls to a second value lower than said first value when said instructor issues an instruction to perform said standby operation.
